# EUROPEAN PATENT APPLICATION

(11) **EP 2 081 382 A2**
(43) Date of publication of application: **22.07.2009**
(21) Application number: 09150584.2
(22) Date of filing: 15.01.2009
(51) Int. Cl.: H04N 7/16

(54) **Content delivering system, relaying apparatus, user terminal, content delivering method, program, and recording medium**

(30) Priority: 17.01.2008 JP 2008008366
(71) Applicant: NEC CORPORATION, Tokyo 108-8001, (JP)
(72) Inventor: ONOE, Yusuke, Tokyo (JP)
(74) Representative: Betten & Resch

(57) **Abstract**

In the broadcast delivering service utilizing an IP network, a content delivering system is provided in which the emergency broadcast can be timely and securely delivered when the disaster or the happening is induced. The content delivering system is configured by including a relaying apparatus and a user terminal, the relaying apparatus includes a data receiving unit that receives video data and emergent data from the IP network, a first format converting unit that converts the emergent data to an OAM frame, and a priority transfer controlling unit that performs control to transfer the converted emergent data to the user terminal in preference to the video data, and the user terminal includes a priority generation controlling unit that performs control to extract the emergent data from the data from the relaying apparatus, and to generate delivery data by priority, a second format converting unit that converts the data from the relaying apparatus to an IP frame, and a data imposing unit that combines the emergent data and the video data to superimpose the emergent data on the video data, and generates the delivery data.

## Description

This application is based upon and claims the benefit of priority from Japanese patent application No.2008-008366, filed on January 17, 2008, the disclosure of which is incorporated herein in its entirety by reference.

### BACKGROUND OF THE INVENTION

The present invention relates to a content delivering system, a relaying apparatus, a user terminal, a content delivering method, a program, and a recording medium, and particularly, to a technique which is appropriately used when an emergency broadcast is timely provided in a broadcast content delivering service utilizing an IP network.

### Description of Related Art

Recently, because the Internet is diffused, and a connection section is broadbandized between an end user and the Internet, a service is actively provided through an IP network, which delivers a broadcast content configured with video and audio. Normally, in a terrestrial television broadcast and a satellite television broadcasting, information, which needs the emergency such as the disaster and the serious happening, is immediately broadcasted in an emergency broadcast with a currently-broadbandized program interrupted or in a form of a ticker display in the currently-broadbandized program. As described above, it is necessary to provide a viewer with emergent information in preference to the currently-broadbandized program.

However, in the conventional broadband delivering service in the IP network, a sufficient condition has not been provided, to realize a priority broadband for the emergent information. Thus, in the broadcast delivering service utilizing the IP network, in many cases, a TV does not include a function for receiving data of the emergency broadband, so that the emergency broadband is not timely delivered when an emergent condition is induced.

For example, in Patent document 1. (Japanese Patent Laid Open Publication No. 2005-236913), a content inserting method is disclosed which can flexibly respond to a desire of a user when an insert content such as a CM broadband and the emergency broadband is inserted to the broadcast content delivered in a multi-cast broadband. In such a content inserting method, an insert condition is determined based on the priority from the insert condition included in the broadcast content, the insert condition included in the insert content, and the insert condition inputted from a user terminal. In a term from the starting for reading the insert content to the completion for reading the insert content, control is performed to stop reading the broadcast content, and to restart reading for the broadcast content immediately after the completion for reading the insert content.

By the way, in the IEEE (Institute of Electrical and Electronics Engineers) 802.1ag, the so-called OAM (Operation, Administration and Maintenance) is defined, which is a method for providing operating, administrating, and maintaining means in a wide area network using the Layer 2 technique such as the Ethernet (Trade Mark). Specifically, three functions are defined, which are bases, are an arrivability monitoring function between monitoring points, a loop back testing function, and a channel searching function in an L2 network. In any function of the three functions, the failure management is executed by transmitting an OAM frame as a check frame to a target apparatus. As described above, the OAM is anticipated as a technique for realizing a maintaining and administrating function in the wide area Ethernet (Trade Mark).

For example, in Patent document 2 (Japanese Patent Laid Open Publication No. 2002-158663), an ATM communicating apparatus is disclosed, in which a transmission rate of significant information to be added can be assured by using this OAM function without reducing transmission efficiency of main data. Such an ATM communicating apparatus is provided with data inserting means for mapping the significant information other than the main data to a unused octet area in a unique field of an OAM cell, and data extracting means for extracting the significant information mapped in such an unused octet area, and transmits and receives the significant information by using the unused octet area in the unique field of the OAM cell.

In the content inserting method disclosed in Patent document 1, it is not clear how to determine the priority, which is a key to determine the insert condition from the insert conditions of three sides of a broadcast content provider side, a insert content provider side, and a user side. From such an object that the desire of the user is flexibly responded to, it is not also easy to consider that the broadcast content such as the emergency broadcast is timely provided. In the ATM communicating apparatus disclosed in Patent document 2, a technique for the OAM is used for the transmission in the ATM, but does not realize to timely deliver the emergency broadcast in the broadcast delivering service using the IP network.

### SUMMARY

The present invention is developed in consideration of the above problems, an exemplary object of the present invention is to provide the content delivering system, the content delivering method, and the like in which the emergency broadcast can be timely and surely delivered when the disaster or the happening is induced in the broadcast delivering service using the IP network.

To achieve such an object, the present invention has the following features.

### <Content delivering system >

A content delivering system according to an aspect of the present invention is configured by including a relaying apparatus for relaying the content from the IP network, and the user terminal for obtaining the content from the relaying apparatus, and transferring the obtained content to a television receiving apparatus, the relaying apparatus includes a data receiving unit that receives video data and emergent data as the content from the IP network, a first format converting unit that converts the emergent data received by the data receiving unit from a MAC frame to an OAM frame, and a priority transfer controlling unit that performs control to transfer, to the user terminal in preference to the video data , the emergent data converted by the first format converting unit to the OAM frame, and the user terminal includes a priority generation controlling unit that performs control to extract the emergent data from the content relayed from the relaying apparatus, and to generate delivery data by giving priority to the emergent data, a second format converting unit that converts the video data and the emergent data from the relaying apparatus from the MAC frame or the OAM frame to an IP frame, and a data superimposing unit that combines the emergent data and the video data to superimpose the emergent data on the video data, and generates the delivery data.

### <Relaying apparatus>

A relaying apparatus according to still another aspect of the present invention configures a content delivering system along with the user terminal for transferring the content obtained through the IP network to the television receiving apparatus, is the relaying apparatus for relaying the content from the IP network to the user terminal, and includes the data receiving unit that receives the video data and the emergent data as the content from the IP network, a format converting unit that converts the emergent data received by the data receiving unit from the MAC frame to the CAM frame, and a priority transfer controlling unit that performs control to transfer the emergent data converted by the format converting unit to the OAM frame to the user terminal in preference to the video data.

### <User terminal>

A user terminal according to still another aspect of the present invention configures the content delivering system along with the relaying apparatus for relaying the content from the IP network, is the user terminal for obtaining the content from the relaying apparatus to transfer the obtained content to the television receiving apparatus, and includes a priority generation controlling unit that performs control to extract the emergent data from the content, which includes the video data and the emergent data, relayed from the relaying apparatus, and to generating the delivery data by giving priority to the emergent data, a format converting unit that converts the video data obtained as the MAC frame from the relaying apparatus and the emergent data obtained as the OAM frame from the relaying apparatus to the IP frame, and the data imposing unit that combines the emergent data and the video data to superimpose the emergent data on the video data, and generating the delivery data.

### <Content delivering method>

A content delivering method according to still another aspect of the present invention is a content delivering method of the content delivering system configured by including the relaying apparatus for relaying the content from the IP network, and the user terminal for obtaining the content from the relaying apparatus to transfer the obtained content to the television receiving apparatus, and includes, in the relaying apparatus, a data receiving step of receiving, as the content, the video data and the emergent data from the IP network, a first format converting step of converting the emergent data received at the data receiving step from the MAC frame to the OAM frame, and a priority transfer controlling step of performing control to transfer the emergent data converted to the OAM frame at the first format converting step to the user terminal in preference to the video data, and includes, in the user terminal, a priority generation controlling step of performing control to extract the emergent data from the content relayed from the relaying apparatus, and to generate the delivery data by giving priority to the emergent data, a second format converting step of converting the video data and the emergent data from the relaying apparatus from the MAC frame or the OAM frame to the IP frame, and a data imposing step of combining the emergent data and the video data to superimpose the emergent data on the video data, and generating the delivery data.

### <Program>

A program according to still another aspect of the present invention is a program used for the content delivering system configured by including the relaying apparatus for relaying the content from the IP network, and the user terminal for obtaining the content from the relaying apparatus to transfer the obtained content to the television receiving apparatus, and causes a computer in the relaying apparatus to perform a data receiving step of receiving, as the content, the video data and the emergent data from the IP network, a first format converting step of converting the emergent data received at the data receiving step from the MAC frame to the OAM frame, and a priority transfer controlling step of performing control to transfer the emergent data converted to the OAM frame at the first format converting step to the user terminal in preference to the video data, and causes the computer in the user terminal to perform a priority generation controlling step of performing control to extract the emergent data from the content relayed from the relaying apparatus, and to generate the delivery data by giving priority to the emergent data, a second format converting step of converting the video data and the emergent data from the relaying apparatus from the MAC frame or the OAM frame to the IP frame, and a data imposing step of combining the emergent data and the video data to superimpose the emergent data on the video data, and generating the delivery data.

### <Recording medium>

A first recording medium of the present invention is the recording medium in which the above program can be recorded, and can be read by the computer.

### BRIEF DESCRIPTION OF THE DRAWINGS

The objects and features of the present invention will become more apparent from the consideration of the following detailed description taken in conjunction with the accompanying drawings, in which:
Fig. 1 is a diagram illustrating a configuration of a content delivering system to which the present invention is applied;
Fig. 2 is a diagram illustrating the configuration of the content delivering system according to an exemplary embodiment of the present invention;
Fig. 3 is a diagram describing the control for priority transfer executed in an access base station apparatus according to the exemplary embodiment of the present invention;
Fig. 4 is a functional block diagram illustrating an internal configuration of an emergent data extracting unit of an access terminal according to the exemplary embodiment of the present invention;
Fig. 5 is a diagram describing a frame structure and a content of an OAM frame according to the exemplary embodiment of the present invention;
Fig. 6 is a diagram describing the frame structure and the content of the OAM frame according to the exemplary embodiment of the present invention; and
Fig. 7 is a diagram illustrating a configuration of the content delivering system according to the exemplary embodiment of the present invention.

### EXEMPLARY EMBODIMENT

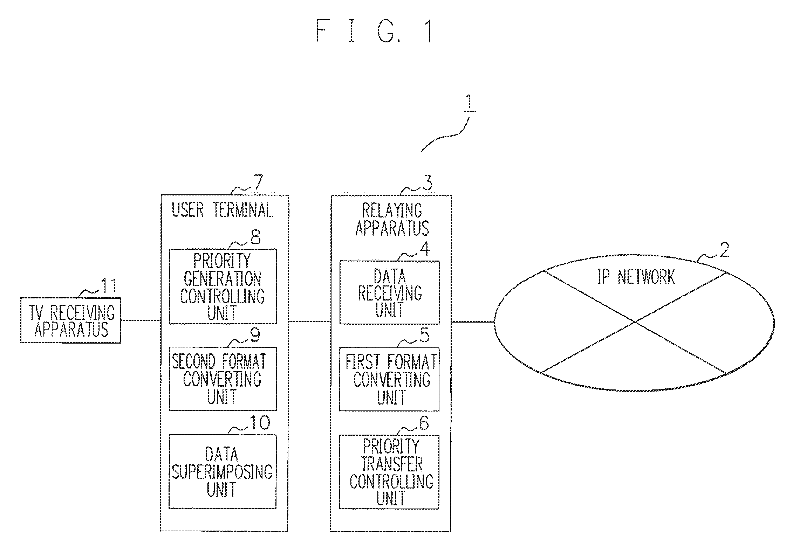

As illustrated in Fig. 1, the content delivering system, to which the present invention is applied, is configured by including a relaying apparatus 3 for relaying the content from an IP network 2 and a user terminal 7 for transmitting the content from the relaying apparatus 3 to a television receiving apparatus 11. The relaying apparatus 3 includes a data receiving unit 4, a first format converting unit 5, and a priority transfer controlling unit 6. The user terminal 7 includes a priority generation controlling unit 8, a second format converting unit 9, and a data superimposing unit 10.

In the relaying apparatus 3, the data receiving unit 4 receives the video data and the emergent data in a format of the MAC frame. The first format converting unit 5 format-converts, to the OAM frame, the emergent data received in a format of the MAC frame by the data receiving unit 4. The priority transfer controlling unit 6 performs control to transfer, to the user terminal in priority of the video data, the emergent data converted to the OAM frame by the first format converting unit 5. For example, it is temporarily stopped to transfer the video data, and the emergent data is transferred by priority.

In the user terminal 7, the priority generation controlling unit 8 performs control to extract the emergent data from the video data and the emergent data transferred from the relaying apparatus 3, and to generate the delivery data. The delivery data is generated by executing a format conversion to the after-mentioned IP frame and data combination. For example, the format conversion for the video data is temporarily stopped, and the format conversion for the emergent data is executed in first, and is data-combined with the converted video data. The second format converting unit 9 converts the video data obtained in a format of the MAC frame and the emergent data obtained in a format of the OAM frame to a format of the IP frame which is a format which can be received by the television receiving apparatus 11. The data superimposing unit 10 combines the emergent data converted by the second format converting unit 9 and the converted video data, and superimposes the emergent data on the video data to generate the delivery data to the television receiving apparatus 11.

In the present invention, the communication between the IP network 2 and the relaying apparatus 3 is executed in the MAC frame, the communication between the relaying apparatus 3 and the user terminal 7 is executed in the OAM frame (only the emergent data, the video data is communicated in the MAC frame), and the communication between the user terminal 7 and the television receiving apparatus 11 is executed in the IP frame. Since the emergent information is communicated between the relaying apparatus 3 and the user terminal 7 by using the OAM frame, even when a network session is not provided between the relaying apparatus 3 and the user terminal 7, or is broken because of some cause, the communication becomes to be able to be executed on the Ethernet (Trade Mark). That is, the communication can be executed between the relaying apparatus 3 and the user terminal 7 on the Ethernet without the network session, a contingency condition induced on the network can be also responded to, and the emergent data format-converted to the OAM frame can be surely transferred to the user terminal 7.

When data is transferred from the relaying apparatus 3 to the user terminal 7, or data is transferred from the user terminal 7 to the television receiving apparatus 11, the emergent data is transferred to the user terminal 7 before the video data, or is format-converted to the IP frame before the video data to be generated as the delivery data by the data combination. Thus, when the emergent data is issued through the IP network 2, the issued emergent data can be quickly received by the television receiving apparatus 11, and can be viewed as the emergency broadcast by viewer.

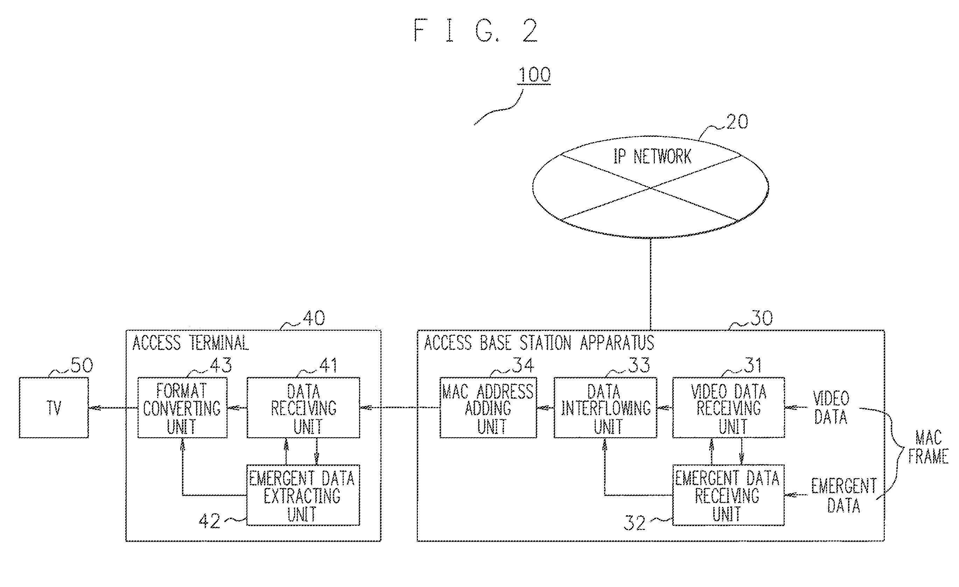

A specific exemplary embodiment of the present invention will be described below by referring to Fig. 2 to Fig. 7.

### [First exemplary embodiment]

Fig. 2 is a diagram illustrating a configuration of the content delivering system according to a first exemplary embodiment of the present invention. A content delivering system 100 of the present exemplary embodiment is configured by including an IP network 20, an access base station apparatus 30, an access terminal 40, and a TV 50. The IP network 20 corresponds to the IP network 2 (Fig. 1), the access base station apparatus 30 corresponds to the relaying apparatus 3 (Fig. 1), the access terminal 40 corresponds to the user terminal 7 (Fig. 1), and the TV 50 corresponds to the television receiving apparatus 11 (Fig. 1).

The access base station apparatus 30 is provided with a video data receiving unit 31, an emergent data receiving unit 32, a data interflowing unit 33, and a MAC address adding unit 34. The video data receiving unit 31 and the emergent data receiving unit 32 correspond to the data receiving unit 4 (Fig. 1). The emergent data receiving unit 32 corresponds to the first format converting unit 5 and the priority transfer controlling unit 6 (Fig. 1). The data interflowing unit 33 corresponds to the priority transfer controlling unit 6 (Fig. 1).

The video data receiving unit 31 reads a MAC address of the video data transferred from the IP network 20, and receives and takes in the data when the destination of the data is an own station. The emergent data receiving unit 32 also reads the MAC address to determine whether the destination of the data is the own station, and takes in and receives the emergent data from the IP network in a similar way to the video data receiving unit 31. The emergent data receiving unit 32 identifies from an emergency ID added in the frame that such a frame is the emergent data, and receives the emergent data. Meanwhile, as described above, the video data and the emergent data from the IP network 20 are transferred as the MAC frame.

The emergent data receiving unit 32 executes the format conversion from the MAC frame to the OAM frame when receiving the data. This is because the emergent data is communicated in a format of the OAM frame between the access base station apparatus 30 and the access terminal 40. When receiving the emergent data, the emergent data receiving unit 32 performs control to transfer the emergent data to the access terminal 40 in preference to the video data received by the video data receiving unit 31. As described later in detail, it is temporarily stopped to transfer the video data from the video data receiving unit 31 to the data interflowing unit 33, and the emergent data is transferred by priority from the data interflowing unit 33.

The data interflowing unit 33 is a function unit in which the video data from the video data receiving unit 31 and the emergent data from the emergent data receiving unit 32 interflow, and transfers each data to the MAC address adding unit 34 according to the control by the emergent data receiving unit 32. The MAC address adding unit 34 adds the MAC address expressing the access terminal 40, which is a transmission destination, to the data from the data interflowing unit 33, and transmits, to the access terminal 40, the video data as the MAC frame, and the emergent data as the OAM frame.

The access terminal 40 is provided with a data receiving unit 41, an emergent data extracting unit 42, and a format converting unit 43. The emergent data extracting unit 42 corresponds to the priority generation controlling unit 8 and the second format converting unit 9 (Fig. 1). The format converting unit 43 corresponds to the second format converting unit 9 and the data superimposing unit 10 (Fig. 1).

The data receiving unit 41 reads the MAC address of the video data and the emergent data transferred from the access base station apparatus 30, and receives and takes in the data when the destination of the data is an own terminal. The emergent data extracting unit 42 extracts the emergent data from the data received by the data receiving unit 41. The emergent data extracting unit 42 performs control so that the extracted emergent data is format-converted from the OAM frame to the IP frame, and the extracted data is data-combined by priority by the format converting unit 43 to be generated as the delivery data. As described later in detail, it is temporarily stopped to transfer the video data from the data receiving unit 41 to the format converting unit 43, and the emergent data is data-combined by priority by the format converting unit 43. The format converting unit 43 format-converts the video data from the MAC frame to the IP frame, and also, combines the video data and the emergent data, which are converted to the IP frame, to superimpose the emergent data on the video data, and generates the delivery data.

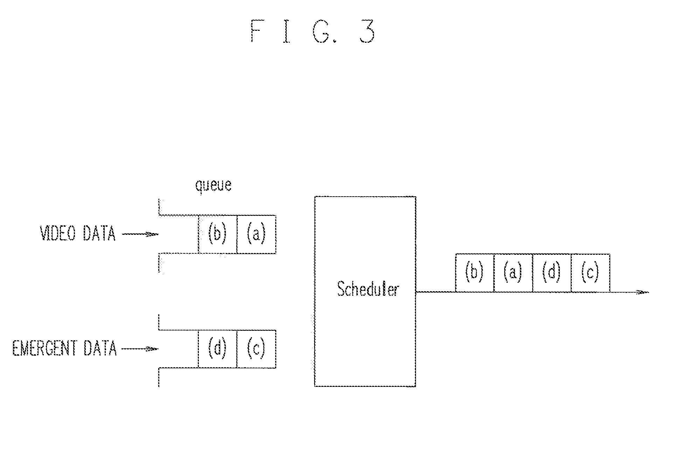

Fig. 3 is a diagram describing the control for priority transfer executed in the access base station apparatus 30 according to the present exemplary embodiment. In the access base station apparatus 30, the control is executed so that the emergent data is transferred by priority to the access terminal 40 by the emergent data receiving unit 32, the video data receiving unit 31, and the data interflowing unit 33. Each process is scheduled based on the priority and the weighting for the process to the received video data and the received emergent data, and each process is executed based on the scheduling.

In an example of Fig. 3, the processing order for processing the emergent data (c), and (d), and the video data (a) and (b) is determined by the scheduling. The emergent data receiving unit 32 transfers the emergent data to the data interflowing unit 33 in order of the emergent data (c), and (d) according to the determined processing order, next, the video data receiving unit 31 transfers the video data to the data interflowing unit 33 in order of the video data (a) and (b). The data interflowing unit 33 transfers each data to the MAC address adding unit 34 in the transferring order, and causes the MAC address adding unit 34 to transfer the emergent data by priority to the access terminal 40. In the present invention, "Strict Priority" or "Weighted Round-robin" can be used as a method for realizing such a priority process.

In the former method, Priority is set to each process flow, and the scheduling for the process flow is executed based on the set Priority. For example, when Priority 2 is set to the process for the video data, and Priority 1. is set to the process for the emergent data, the emergent data is constantly processed by the top priority. As described above, when it is necessary to strictly execute the priority process for the emergent data, it is desirable to adopt the "Strict Priority".

In the latter method, Weight is assigned to each process flow, and queue control is executed according to the set weight. For example, when the weight is assigned in a ratio of two to eight for the process of the video data and the process of the emergent data, the emergent data is rather strictly processed. On the other hand, when the weight is assigned in a ratio of four to six, the emergent data is loosely processed. As described above, when it is necessary to rather flexibly process the emergent data, the "Weighted Round-robin" can be adopted.

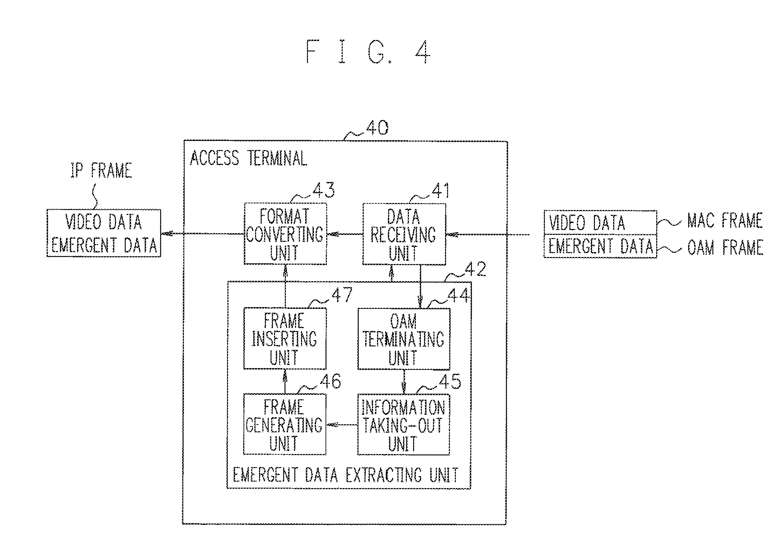

Fig. 4 is a functional block diagram illustrating an internal configuration of the emergent data extracting unit 42 of the access terminal 40 according to the present exemplary embodiment. The access terminal 40 includes the data receiving unit 41, the emergent data extracting unit 42, and the format converting unit 43. The emergent data extracting unit 42 includes an OAM terminating unit 44, an information taking-out unit 45, a frame generating unit 46, and a frame inserting unit 47.

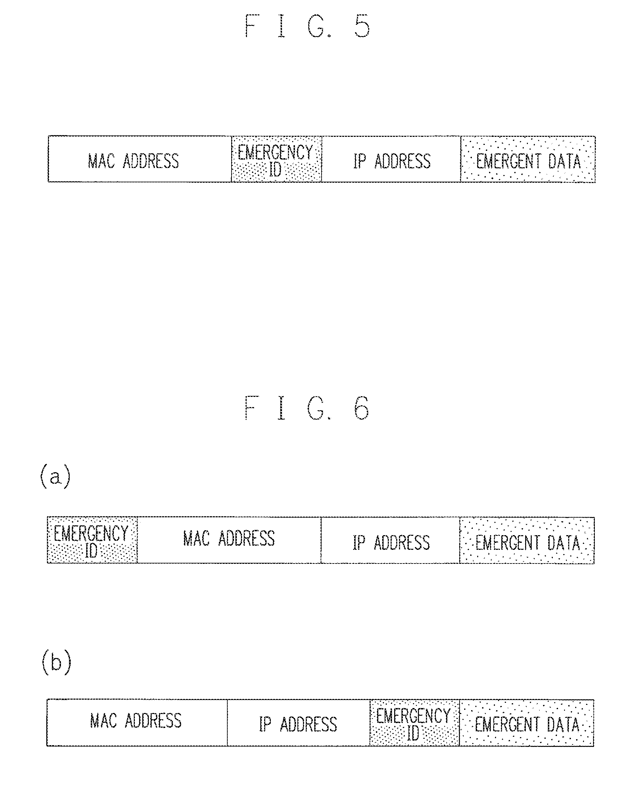

As described above, the data receiving unit 41 reads the MAC address of the data (video data, emergent data) from the access base station apparatus 30, and takes in the data when the destination of the data is an own apparatus. When being the video data, the taken-in data is, as described later, transferred to the format converting unit 43 according to priority process control for the emergent data. On the other hand, when being the emergent data, the taken-in data is transferred to the emergent data extracting unit 42. It is determined, from the existence of the emergency ID in the frame as illustrated in Fig. 5, whether or not the taken-in data is the emergent data.

Meanwhile, while the emergency ID is added between the MAC address and the IP address in Fig. 5, as illustrated in Fig. 6, the emergency ID may be added before the MAC address (Fig. 6 (A)), and may be added between the IP address and the emergent data (Fig. 6 (B)). The format is not strictly defined in the OAM frame used for communicating the emergent data. Since some unused area is included in the frame, it is possible to insert the emergency ID to an arbitrary location of this unused area to designate the corresponding data to be the emergent data.

A configuration inside the emergent data extracting unit 42 will be described. The OAM terminating unit 44 takes out the OAM frame of the emergent data from the data received by the data receiving unit 41. It is determined, from the existence of the emergency ID, whether or not the received data is the emergent data. The information taking-cut unit 45 removes the emergency ID, and the like in the taken-out OAM, and extracts necessary information (the emergent data). The frame generating unit 46 generates the IP frame for the emergent data extracted by the information taking-out unit 45, and converts the emergent data to the format which can be received by the TV 50. The frame inserting unit 47 transfers the emergent data, which is format-converted by the frame generating unit 46 to the IP format, to the format converting unit 43, and the format-converted emergent data is inserted to the video data which is format-converted by the format converting unit 43.

When the emergent data is transferred by the frame inserting unit 47 to the format converting unit 43, the priority process control is executed in a similar way to the access base station apparatus 30. That is, the processing order is determined by the scheduling for the emergent data and the video data, and the frame inserting unit 47 transfers the emergent data by priority to the format converting unit 43, next, the data receiving unit 41 transfers the video data to the format converting unit 43. As described for the access base station apparatus 30, the "Strict Priority" or the "Weighted Round-robin" can be used as a method for realizing the priority process.

The format converting unit 43 format-converts the video data from the data receiving unit 41 from the MAC frame to the IP frame, and also combines the video data and the emergent data, which are format-converted to the IP frame, and superimposes the emergent data on the video data. The emergent data is superimposed by displaying, as the emergency broadcast, a quick report of a message or a ticker on the currently-broadcasted video. The IP frame of the video data, on which the emergent data is superimposed, is transferred by the format converting unit 43 to the TV 50.

According to the present exemplary embodiment, the emergency ID and the emergent data are added by utilizing the OAM of a MAC layer. Since it is adopted to control to process the emergent data in preference to the video data, the emergent data can be quickly processed when the emergent data is obtained from the IP network.

According to the present exemplary embodiment, since the emergent data is transferred by utilizing the OAM frame of the MAC layer, even when the network session is not constructed, it is possible to communicate from the access base station apparatus to the access terminal on the Ethernet. That is, even when the network session is not included, the emergency broadcast can be delivered.

### [Second exemplary embodiment]

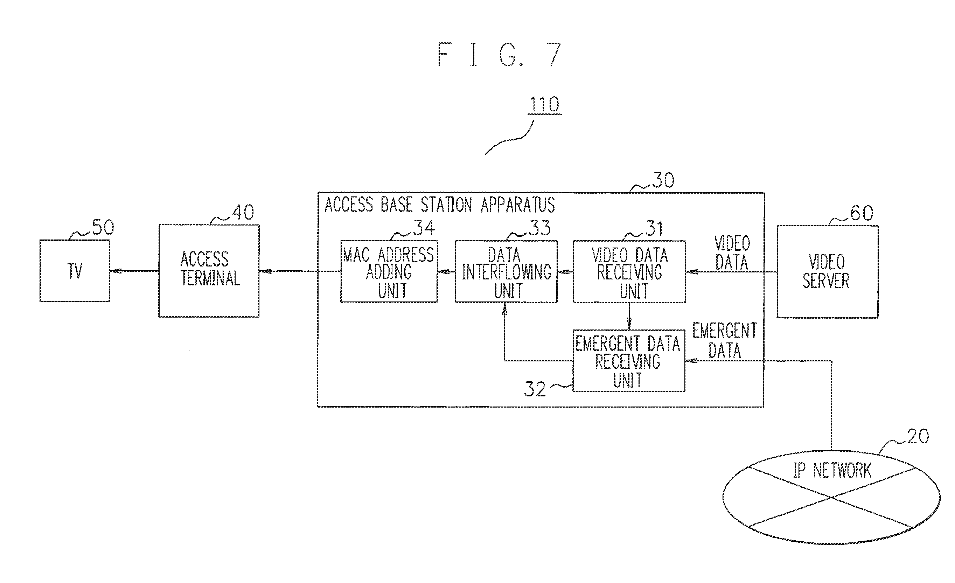

Fig. 7 is a diagram illustrating a configuration of the content delivering system according to a second exemplary embodiment of the present invention. In the first exemplary embodiment, the content delivering system is configured so that the video data and the emergent data are obtained through the IP network 20. In the present exemplary embodiment, the content delivering system is configured so that a video server 60, which is a dedicated server terminal for delivering the video data, is connected to the access base station apparatus 30, the video data is obtained from the video server 60, and the emergent data is obtained from the IP network 20.

Even in the present exemplary embodiment, the priority process control for the emergent data and the combining process (superimposing process) for the emergent data and the video data are executed in a similar way to the first exemplary embodiment. In the priority process control, the "Strict Priority" or the "Weighted Round-robin" can be adopted in a similar way to the first exemplary embodiment.

According to the present exemplary embodiment, while the video data is being stably obtained from the dedicated server, it is possible to quickly process the emergent data, which is obtained from the IP network, by utilizing the OAM of the MAC layer.

As described with referring the exemplary embodiments, according to the advantages of the present invention, in the broadcast delivering service utilizing the IP network, the content delivering system, the content delivering method, and the like are provided, in which the emergency broadcast can be timely and surely delivered when the disaster or the happening is induced.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

That is, the access base station apparatus 30 and the access terminal 40 of the above exemplary embodiments operate according to the process, the means, and the function executed by a program instruction in the computer. Such a program issues an instruction to each component of the computer, and executes the above-described predetermined process and function, for example, schedules the process for the video data and the emergent data by the video data receiving unit 31, the emergent data receiving unit 32, and the data interflowing unit 33 of the access base station apparatus 30, and processes, according to the schedule, the priority transfer control for transferring the emergent data to the access terminal 40 in preference to the video data. Such a program format-converts the emergent data, which is received as the MAC frame, by the emergent data receiving unit 32 of the access base station apparatus 30 to the OAM frame. As described above, each process and means of the above exemplary embodiments are realized by the specific means in which the program and the computer cooperate.

A control operation at each apparatus which configures the content delivering system according to the present embodiment described above, can be executed using a hardware configuration, a software configuration or a combination configuration thereof.

In case where processing is performed using software, a program in which a processing sequence is recorded can be installed and executed in a memory within a computer which is configured on dedicated hardware. Alternatively, a program can be installed and executed in a general-purpose computer that various processing can be executed.

For example, a program can be recorded in a hard disc or a read only memory (ROM) as a recording medium in advance. Alternatively, a program can be temporarily or permanently stored (recorded) in a removable recording medium. The removable recording medium includes a floppy (registered trademark) disc, a Compact Disc Read Only Memory (CD-ROM), a Magneto optical (MO) disc, a Digital Versatile Disc (DVD), a magnetic disc, a semiconductor memory, and so on.

Such a removable recording medium can be provided as so-called package software.

A program can be installed in a computer from a removable recording medium described above. Also, a program can be wirelessly transferred to a computer from a download site, Also, a program can be transmitted to a computer in a wireline method via a network such as a Local Area Network (LAN) and an internet. A computer can receive such a transferred program to install in a recording medium such as an internal hard disk.

An example 1 describes a content delivering system, configured by comprising:
a relaying apparatus for relaying a content from an IP network; and
a user terminal for obtaining the content from the relaying apparatus to transfer the obtained content to a television receiving apparatus,
wherein the relaying apparatus includes:
data receiving means for receiving video data and emergent data as the content from the IP network;
first format converting means for converting the emergent data received by the data receiving means from a MAC frame to an OAM frame; and
priority transfer controlling means for performing control to transfer, to the user terminal in preference to the video data , the emergent data converted by the first format converting means to the OAM frame, and
the user terminal includes:
priority generation controlling means for performing control to extract the emergent data from the content relayed from the relaying apparatus, and to generate delivery data by giving priority to the emergent data;
second format converting means for converting the video data and the emergent data from the relaying apparatus from the MAC frame or the OAM frame to an IP frame; and
data superimposing means for combining the emergent data and the video data to superimpose the emergent data on the video data, and generating the delivery data.

An example 2 describes the content delivering system according to the example 1,
wherein the relaying apparatus includes:
frame transferring means for transferring, to the user terminal, the OAM frame including an emergency ID identifying the emergent data and the emergent data in the frame according to the control by the priority transfer controlling means.

An example 3 describes the content delivering system according to the example 1 or 2,
wherein the user terminal includes:
frame receiving means for receiving, from the relaying apparatus, the OAM frame including the emergency ID identifying the emergent data and the emergent data in the frame.

An example 4 describes the content delivering system according to any one of the examples 1 to 3,
wherein the priority transfer controlling means temporarily stops transferring the video data and transfers the emergent data by priority to the user terminal when the emergent data is received by the data receiving means.

An example 5 describes the content delivering system according to any one of the examples 1 to 4,
wherein the priority transfer controlling means transfers the emergent data to the user terminal in preference to the video data by scheduling based on the priority or queue control based on weighting.

An example 6 describes the content delivering system according to any one of the examples 1 to 5,
wherein the priority generation controlling means format-converts the emergent data to the IP frame in preference to the video data being format-converted to the IP frame, and combines the format-converted emergent data with the format-converted video data before the delivery data is generated when the emergent data is extracted.

An example 7 describes the content delivering system according to any one of the examples 1 to 6,
wherein the priority generation controlling means format-converts the emergent data to the IP frame in preference to the video data being format-converted to the IP frame, and combines the format-converted emergent data with the format-converted video data before the delivery data is generated by the scheduling based on the priority or the queue control based on weighting.

An example 8 describes the content, delivering system according to any one of the examples 1 to 7,
wherein the relaying apparatus obtains the emergent data from a server apparatus connected to an own apparatus, and obtains the video data from the IP network.

An example 9 describes a relaying apparatus, which configures a content delivering system along with a user terminal transferring a content obtained through an IP network to an television receiving apparatus, and relays the content from the IP network to the user terminal, comprising:
data receiving means for receiving video data and emergent data as the content from the IP network
format converting means for converting the emergent data received by the data receiving means from a MAC frame to an OAM frame; and
priority transfer controlling means for performing control to transfer, to the user terminal in preference to the video data, the emergent data converted by the format converting means to the OAM frame.

An example 10 describes the relaying apparatus according to the example 9, further comprising
frame transferring means for transferring, to the user terminal according to the control by the priority transfer controlling means, the OAM frame including an emergency ID identifying the emergent data and the emergent data in the frame.

An example 11 describes the relaying apparatus according to the example 9 or 10,
wherein the priority transfer controlling means temporarily stops transferring the video data and transfers the emergent data by priority to the user terminal when the emergent data is received by the data receiving means.

An example 12 describes the relaying apparatus according to any one of the examples 9 to 11,
wherein the priority transfer controlling means transfers the emergent data to the user terminal in preference to the video data by scheduling based on the priority or queue control based on weighting.

An example 13 describes the relaying apparatus according to any one of the examples 9 to 12,
wherein the data receiving means receives the emergent data from a server apparatus connected to an own apparatus, and receives the video data from the IP network.

An example 14 describes a user terminal, which configures a content delivering system along with a relaying apparatus relaying a content from an IP network, and obtains the content from the relaying apparatus to transfer the obtained content to an television receiving apparatus, comprising:
priority generation controlling means for performing control to extract emergent data from the content, which includes video data and the emergent data, relayed from the relaying apparatus, and to generate delivery data by giving priority to the emergent data;
format converting means for converting the video data obtained as a MAC frame from the relaying apparatus and the emergent data obtained as a OAM frame from the relaying apparatus to an IP frame; and
data superimposing means for combining the emergent data and the video data to superimpose the emergent data on the video data, and generating the delivery data.

An example 15 describes the user terminal according to the example 14, further comprising
frame receiving means for receiving, from the relaying apparatus, the OAM frame including an emergency ID identifying the emergent data and the emergent data in the frame.

An example 16 describes the user terminal according to the example 14 or 15,
wherein the priority generation controlling means format-converts the emergent data to an IP frame in preference to the video data being format-converted to the IP frame, and combines the format-converted emergent data with the format-converted video data before the delivery data is generated when the emergent data is extracted.

An example 17 describes the user terminal according to any one of the examples 14 to 16,
wherein the priority generation controlling means format-converts the emergent data to the IP frame in preference to the video data being format-converted to the IP frame, and combines the format-converted emergent data with the format-converted video data before the delivery data is generated by scheduling based on the priority or queue control based on weighting.

An example 18 describes a content delivering method for a content delivering system configured by including a relaying apparatus for relaying a content from an IP network; and a user terminal for obtaining the content from the relaying apparatus to transfer the obtained content to a television receiving apparatus, comprising:
in the relaying apparatus,
a data receiving step of receiving video data and emergent data as the content from the IP network;
a first format converting step of converting the emergent data received at the data receiving step from a MAC frame to an OAM frame; and
a priority transfer controlling step of performing control to transfer, to the user terminal in preference to the video data, the emergent data converted at the first format converting step to the OAM frame, and
in the user terminal,
a priority generation controlling step of performing control to extract the emergent data from the content relayed from the relaying apparatus, and to generate delivery data by giving priority to the emergent data;
a second format converting step of converting the video data and the emergent data from the relaying apparatus from the MAC frame or the OAM frame to an IP frame; and
a data superimposing step of combining the emergent data and the video data to superimpose the emergent data on the video data, and generating the delivery data.

An example 19 describes the content delivering method according to the example 18, further comprising:
in the relaying apparatus,
a frame transferring step of transferring, to the user terminal, the OAM frame including an emergency ID identifying the emergent data and the emergent data in the frame according to the control at the priority transfer controlling step.

An example 20 describes the content delivering method according to the example 18 or 19, further comprising:
in the user terminal,
a frame receiving step of receiving, from the relaying apparatus, the OAM frame including the emergency ID identifying the emergent data and the emergent data in the frame.

An example 21 describes a program, which is used for a content delivering system configured by including a relaying apparatus for relaying a content from an IP network; and a user terminal for obtaining the content from the relaying apparatus to transfer the obtained content to a television receiving apparatus, causing
a computer of the relaying apparatus to perform:
a data receiving step of receiving video data and emergent data as the content from the IP network
a first format converting step of converting the emergent data received at the data receiving step from a MAC frame to an OAM frame; and
a priority transfer controlling step of performing control to transfer, to the user terminal in preference to the video data , the emergent data converted at the first format converting step to the OAM frame, and
a computer of the user terminal to perform:
a priority generation controlling step of performing control to extract the emergent data from the content relayed from the relaying apparatus, and to generate delivery data by giving priority to the emergent data;
a second format converting step of converting the video data and the emergent data from the relaying apparatus from the MAC frame or the OAM frame to an IP frame; and
a data superimposing step of combining the emergent data and the video data to superimpose the emergent data on the video data, and generating the delivery data.

An example 22 describes the program according to the example 21, causing
the computer of the relaying apparatus to perform:
a frame transferring step of transferring, to the user terminal, the OAM frame including an emergency ID identifying the emergent data and the emergent data in the frame according to the control at the priority transfer controlling step.

An example 23 describes the program according to the example 21 or 22, causing
the computer of the user terminal to perform:
a frame receiving step of receiving, from the relaying apparatus, the OAM frame including the emergency ID identifying the emergent data and the emergent data in the frame.

An example 24 describes a recording medium recording the program according to any one of the examples 21 to 23, and being able to be read by a computer.

## Claims

1. A content delivering system, configured by comprising:
a relaying apparatus for relaying a content from an IP network; and
a user terminal for obtaining the content from the relaying apparatus to transfer the obtained content to a television receiving apparatus,
wherein the relaying apparatus includes:
data receiving means for receiving video data and emergent data as the content from the IP network;
first format converting means for converting the emergent data received by the data receiving means from a MAC frame to an OAM frame; and
priority transfer controlling means for performing control to transfer, to the user terminal in preference to the video data, the emergent data converted by the first format converting means to the OAM frame, and
the user terminal includes:
priority generation controlling means for performing control to extract the emergent data from the content relayed from the relaying apparatus, and to generate delivery data by giving priority to the emergent data;
second format converting means for converting the video data and the emergent data from the relaying apparatus from the MAC frame or the OAM frame to an IP frame; and
data superimposing means for combining the emergent data and the video data to superimpose the emergent data on the video data, and generating the delivery data.

2. A relaying apparatus, which configures a content delivering system along with a user terminal transferring a content obtained through an IP network to a television receiving apparatus, and relays the content from the IP network to the user terminal, comprising:
data receiving means for receiving video data and emergent data as the content from the IP network;
format converting means for converting the emergent data received by the data receiving means from a MAC frame to an OAM frame; and
priority transfer controlling means for performing control to transfer, to the user terminal in preference to the video data, the emergent data converted by the format converting means to the OAM frame.

3. A user terminal, which configures a content delivering system along with a relaying apparatus relaying a content from an IP network, and obtains the content from the relaying apparatus to transfer the obtained content to a television receiving apparatus, comprising:
priority generation controlling means for performing control to extract emergent data from the content, which includes video data and the emergent data, relayed from the relaying apparatus, and to generate delivery data by giving priority to the emergent data;
format converting means for converting the video data obtained as a MAC frame from the relaying apparatus and the emergent data obtained as a OAM frame from the relaying apparatus to an IP frame; and
data superimposing means for combining the emergent data and the video data to superimpose the emergent data on the video data, and generating the delivery data.

4. The delivering system or apparatus according to claim 1 or 2, comprising:
frame transferring means for transferring, to the user terminal, the OAM frame including an emergency ID identifying the emergent data and the emergent data in the frame according to the control by the priority transfer controlling means.

5. The system or terminal according to claim 1, 3 or 4,
wherein the user terminal includes:
frame receiving means for receiving, from the relaying apparatus, the OAM frame including the emergency ID identifying the emergent data and the emergent data in the frame.

6. The system or apparatus according to any one of claims 1, 2 or 4 to 5,
wherein the priority transfer controlling means temporarily stops transferring the video data and transfers the emergent data by priority to the user terminal when the emergent data is received by the data receiving means.

7. The system or apparatus according to any one of claims 1, 2 or 4 to 6,
wherein the priority transfer controlling means transfers the emergent data to the user terminal in preference to the video data by scheduling based on the priority or queue control based on weighting.

8. The system or terminal according to any one of claims 1, 3, or 4 to 7,
wherein the priority generation controlling means format-converts the emergent data to the IP frame in preference to the video data being format-converted to the IP frame, and combines the format-converted emergent data with the format-converted video data before the delivery data is generated when the emergent data is extracted.

9. The system or terminal according to any one of claims 1, 3 or 4 to 8,
wherein the priority generation controlling means format-converts the emergent data to the IP frame in preference to the video data being format-converted to the IP frame, and combines the format-converted emergent data with the format-converted video data before the delivery data is generated by the scheduling based on the priority or the queue control based on weighting.

10. The system or apparatus according to any one of claims 1, 2 or 4 to 9,
wherein the relaying apparatus obtains the emergent data from a server apparatus connected to an own apparatus, and obtains the video data from the IP network.

11. A content delivering method for a content delivering system configured by including a relaying apparatus for relaying a content from an IP network; and a user terminal for obtaining the content from the relaying apparatus to transfer the obtained content to a television receiving apparatus, comprising:
in the relaying apparatus,
a data receiving step of receiving video data and emergent data as the content from the IP network;
a first format converting step of converting the emergent data received at the data receiving step from a MAC frame to an OAM frame; and
a priority transfer controlling step of performing control to transfer, to the user terminal in preference to the video data, the emergent data converted at the first format converting step to the OAM frame, and
in the user terminal,
a priority generation controlling step of performing control to extract the emergent data from the content relayed from the relaying apparatus, and to generate delivery data by giving priority to the emergent data;
a second format converting step of converting the video data and the emergent data from the relaying apparatus from the MAC frame or the OAM frame to an IP frame; and
a data superimposing step of combining the emergent data and the video data to superimpose the emergent data on the video data, and generating the delivery data.

12. The content delivering method according to claim 11, further comprising:
in the relaying apparatus,
a frame transferring step of transferring, to the user terminal, the OAM frame including an emergency ID identifying the emergent data and the emergent data in the frame according to the control at the priority transfer controlling step, and/or
in the user terminal,
a frame receiving step of receiving, from the relaying apparatus, the OAM frame including the emergency ID identifying the emergent data and the emergent data in the frame.

13. A program, which is used for a content delivering system configured by including a relaying apparatus for relaying a content from an IP network: and a user terminal for obtaining the content from the relaying apparatus to transfer the obtained content to a television receiving apparatus, causing
a computer of the relaying apparatus to perform:
a data receiving step of receiving video data and emergent data as the content from the IP network;
a first format converting step of converting the emergent data received at the data receiving step from a MAC frame to an OAM frame; and
a priority transfer controlling step of performing control to transfer, to the user terminal in preference to the video data, the emergent data converted at the first format converting step to the OAM frame, and
a computer of the user terminal to perform:
a priority generation controlling step of performing control to extract the emergent data from the content relayed from the relaying apparatus, and to generate delivery data by giving priority to the emergent data;
a second format converting step of converting the video data and the emergent data from the relaying apparatus from the MAC frame or the OAM frame to an IP frame; and
a data superimposing step of combining the emergent data and the video data to superimpose the emergent data on the video data, and generating the delivery data.

14. The program according to claim 13, causing
the computer of the relaying apparatus to perform:
a frame transferring step of transferring, to the user terminal, the OAM frame including an emergency ID identifying the emergent data and the emergent data in the frame according to the control at the priority transfer controlling step, and/or
causing the computer of the user terminal to perform:
a frame receiving step of receiving, from the relaying apparatus, the OAM frame including the emergency ID identifying the emergent data and the emergent data in the frame.

15. A recording medium recording the program according to any one of claims 13 to 14, and being able to be read by a computer.
